# EUROPÄISCHE PATENTSCHRIFT

(11) **EP 2 829 357 B1**
(45) Veröffentlichungstag und Bekanntmachung des Hinweises auf die Patenterteilung: **01.11.2017**
(21) Anmeldenummer: 14177443.0
(22) Anmeldetag: 17.07.2014
(51) Int. Cl.: B23Q 3/18, B25B 5/06

(54) **Bearbeitungsstation für Flugzeugstrukturbauteile mit einer Zentrieranordnung für einen Bauteilträger**
Processing station for structural components of airplanes with a centring assembly for a component holder
Poste d`usinage pour les composantes structurelles d`avion avec un système de centrage pour un porte-composant

(30) Priorität: 26.07.2013 DE 102013108003
(43) Veröffentlichungstag der Anmeldung: 28.01.2015
(73) Patentinhaber: Broetje-Automation GmbH, 26180 Rastede (DE)
(72) Erfinder: Eusterwiemann, Christoph, 26121 Oldenburg (DE)
(74) Vertreter: Gottschald, Jan

(56) Entgegenhaltungen:
- WO-A1-2010/133653
- DE-U1- 20 215 718
- DE-U1-202008 013 438
- FR-A1- 2 966 073
- US-A- 4 598 453
- US-A1- 2007 187 880
- US-B2- 8 220 134

## Beschreibung

Die Erfindung betrifft eine Zentrieranordnung für einen Bauteilträger mit den Merkmalen des Anspruchs 1 sowie ein Verfahren zur Zentrierung und Verriegelung einer Zentrieraufnahme durch einen Zentrierbolzen mit den Merkmalen des Anspruchs 15.

Flugzeuge und andere Flugkörper weisen regelmäßig sehr große Strukturbauteile auf wie etwa Flügel, Rümpfe oder Teile derselben. Bei der automatisierten Herstellung der Flugkörper werden diese Strukturbauteile in entsprechend groß dimensionierten Bearbeitungsstationen manipuliert und durch verschiedene Werkzeugmaschinen bearbeitet. Ein beispielhafter Arbeitsschritt sieht das automatisierte Setzen einer Reihe von Nietverbindungen vor, was in der Vergangenheit häufig manuell ausgeführt werden musste.

Aus dem Stand der Technik und speziell aus der als nächstkommend gesehenen US 8,220,134 ist eine Bearbeitungsstation für Flugzeugstrukturbauteile bekannt, bei der ein rechteckiger Aufspannrahmen als Bauteilträger durch zwei Positioniertürme an seinen Querseiten gehalten und während der Bearbeitung bewegt wird. Durch eine unabhängige Höhenverschiebung der Befestigungspunkte an den Positioniertürmen sowie eine Rotation des Aufspannrahmens um die durch die Befestigungspunkte definierte Achse kann der Aufspannrahmen und das auf ihm befestigte Werkstück bzw. Flugzeugstrukturbauteil speziell so bewegt werden, dass eine Bearbeitung durch ein Werkzeug, etwa eine Nietmaschine, an verschiedenen Punkten des Flugzeugstrukturbauteils möglich wird. Dieses Werkzeug ist wiederum an einem in Längsrichtung des Aufspannrahmens beweglichen C-Gestell befestigt. Auf diese Weise ist gewährleistet, dass das Werkzeug alle zu bearbeitenden Stellen des Werkstücks erreichen kann.

Durch die bereits beschriebene Größe der Flugzeugstrukturbauteile ist das Auswechseln der Flugzeugstrukturbauteile nach erfolgter Bearbeitung sehr aufwändig. Es muss nicht nur das in seiner Bearbeitung an dieser Bearbeitungsstation abgeschlossene Flugzeugstrukturbauteil von dem Aufspannrahmen entfernt werden, sondern auch das nächste, noch zu bearbeitende Flugzeugstrukturbauteil - entweder direkt oder mittels eines speziellen Zwischengeschirrs, welches die entsprechenden Befestigungsstellen zur Verfügung stellt - auf dem Aufspannrahmen platziert und befestigt werden. Dies ist nicht nur wegen der Größe der Flugzeugstrukturbauteile zeitraubend. Vielmehr erfordern die im Luft- und Raumfahrtbereich geforderten sehr engen Toleranzen auch eine äußerst genaue Platzierung des Flugzeugstrukturbauteils auf dem Aufspannrahmen, damit bei der automatisierten Bewegung des Aufspannrahmens und des Werkzeugs zueinander die geforderten Arbeitspunkte auf dem Flugzeugstrukturbauteil durch das Werkzeug auch richtig angesteuert werden können. Entsprechend lange dauert die aus dem Stand der Technik bekannte manuelle Ausrichtung des Flugzeugstrukturbauteils auf dem Aufspannrahmen. Die hierdurch bedingte lange Ausfallzeit der regelmäßig sehr teuren Bearbeitungsstation reduziert dementsprechend ihren Auslastungsgrad bedeutend und führt somit zu deutlich höheren Investitionskosten für jeden produzierten Flugkörper. Ferner muss das jeweilige Mittel der Ausrichtung des Flugzeugstrukturbauteils auf dem Aufspannrahmen auch sicherstellen, dass trotz der verschiedenen Bewegungen des Aufspannrahmens um mehrere Achsen kein Verrutschen oder gar Ablösen des Flugzeugstrukturbauteils auf dem Aufspannrahmen eintritt.

Ferner ist aus der US 4,598,453 eine Vorrichtung zum Ausrichten von Leiterplatten mittels Nocken beschrieben.

Es besteht also das Problem der Erfindung darin, die aus dem Stand der Technik bekannte Bearbeitungsstation für Flugzeugstrukturbauteile mit ihren Bestandteilen so weiter zu entwickeln, dass die Ausfallzeit der Bearbeitungsstation beim Auswechseln des zu bearbeitenden Flugzeugstrukturbauteils auf dem Aufspannrahmen verkürzt werden kann.

Das obige Problem wird bezogen auf eine Bearbeitungsstation für Flugzeugstrukturbauteile mit einer Zentrieranordnung für einen Bauteilträger durch die Merkmale des Anspruchs 1 und bezogen auf ein Verfahren zur Zentrierung und Verriegelung einer Zentrieraufnahme durch einen Zentrierbolzen durch die Merkmale des Anspruchs 15 gelöst.

Wesentlich ist die Erkenntnis, dass ein oder mehrere Zentrierbolzen an dem Bauteilträger vorgesehen werden können, welche durch eine Drehung mittels eines Drehantriebs in einen zentrierenden Eingriff mit einer entsprechenden jeweiligen Zentrieraufnahme an dem betreffenden Werkstück, also etwa dem Flugzeugstrukturbauteil oder an einem etwaigen Zwischengeschirr, gebracht werden können. Das Werkstück kann also - etwa durch einen Kran oder eine andere Vorrichtung - auf den Bauteilträger gehoben werden, wobei die Positionierung nur insoweit präzise erfolgen muss, dass die Zentrierbolzen - zunächst noch schwimmend - in die Zentrieraufnahme geführt werden. Erst in einem weiteren Schritt erfolgt dann die Zentrierung, bei der über einen zentrierenden Eingriff die für die Bearbeitung notwendige Genauigkeit in der Positionierung hergestellt wird. Auf diese Weise kann eine rasche Beladung des Bauteilträgers unter Zuhilfenahme einer Vorrichtung wie einem Kran erfolgen, welche die notwendige Kraft zum Bewegen des Flugzeugstrukturbauteils aufbringen kann ohne dabei besonders präzise Bewegungen ausführen können zu müssen. Die Zentrierung erfolgt dann in einem zweiten Schritt ebenfalls automatisch. Im Ergebnis ist damit auch eine vertikale Beladung des Bauteilträgers z.B. mit einem Flugzeugstrukturbauteil möglich.

Die genannten Zentrieraufnahmen müssen dabei nicht Bestandteil des Werkstücks im eigentlichen Sinne sein, sondern können als separate Bauteile an entsprechenden Stellen des Werkstücks befestigt werden oder Bestandteil eines entsprechenden Zwischengeschirrs sein. Diese mittel- oder unmittelbare Befestigung der Zentrieraufnahmen am Werkstück kann aber im Vorfeld, parallel und unabhängig zu der Bearbeitungsstation erfolgen, so dass jeder hier etwaig anfallende Zeitaufwand die Auslastung der Bearbeitungsstation nicht einschränkt.

Der genannte Drehantrieb zur Drehung des Zentrierbolzens umfasst nicht notwendigerweise einen Motor. Vielmehr kann es sich um jedwede, potentiell auch handbetriebene Anordnung handeln, durch die eine Drehung des Zentrierbolzens wie beschrieben bewirkt werden kann, welche Drehung um eine Längsachse des Zentrierbolzens erfolgt.

Der vorschlagsgemäße zentrierende Eingriff wiederum verhindert entlang zumindest einer Richtung, welche regelmäßig senkrecht zu der genannten Längsachse des Zentrierbolzens ist, eine translatorische Bewegung zwischen dem Zentrierbolzen und der Zentrieraufnahme. Mittelbar wird damit eine translatorische Bewegung zwischen dem Bauteilträger und dem Werkstück in eben dieser Richtung verhindert.

Durch die Drehung wird also eine relative Lage, in welcher eine Bewegung in alle Richtungen senkrecht zur Längsachse zwischen dem Zentrierbolzen und der Zentrieraufnahme möglich ist, in eine Lage umgewandelt, in welcher in mindestens einer solchen, zur Längsachse senkrechten Richtung keine Bewegung zwischen dem Zentrierbolzen und der Zentrieraufnahme mehr möglich ist, unter Absehung von durch Fertigungstoleranzen bedingte und damit hier vernachlässigbare Bewegungen.

Die besonders bevorzugten Ausführungsformen gemäß den Ansprüchen 2 bis 4 beschreiben eine Ausgestaltung des Zentrierbolzens und der Zentrieraufnahme sowie einen entsprechenden Eingriff zwischen den beiden, welcher für das Erreichen einer Zentrierungswirkung besonders geeignet ist. Insbesondere wird ein Verhaken des Zentrierbolzens in der Zentrieraufnahme bei der Drehung wirksam vermieden.

Die bevorzugten Ausführungsformen der Ansprüche 5 und 6 beschreiben eine Variante, bei welcher der Formschluss in einer radialen Richtung des Zentrierbolzens und insbesondere nur in dieser radialen Richtung hergestellt wird. Das Werkstück kann in unterschiedlichen Richtungen unterschiedliche Toleranzen und vor allem durch eine sehr viel größere Dimensionierung in einer bestimmten Längsrichtung des Werkstücks ein ausgeprägtes Dehnungsverhalten in dieser Längsrichtung aufweisen. Aus diesem Grund kann es sinnvoll sein, eine Zentrierung nur in einer anderen als dieser Längsrichtung durch die Zentrieranordnung bewirken zu lassen. Ferner sind regelmäßig mehrere vorschlagsgemäße Zentrieranordnungen auf einem einzelnen Bauteilträger vorgesehen. Um ein Verkanten beim Zentrieren aller dieser Zentrieranordnungen zu verhindern und die Toleranzaddition in Grenzen zu halten bzw. zu vermeiden kann eine solche einseitige, aber von Zentrieranordnung zu Zentrieranordnung abwechselnde Zentrierung einer Vielzahl von Zentrieranordnungen ebenfalls vorteilhaft sein.

Dahingegen sieht die bevorzugte Ausführungsform des Anspruchs 7 eine Zentrierung in mehr als einer Richtung schon durch eine einzelne vorschlagsgemäße Zentrieranordnung vor, wodurch eine noch genauere Positionierung in einer Ebene erreicht wird.

In der bevorzugten Ausführungsform des Anspruchs 8 wird die Zentrierungsfunktion der Zentrieranordnung noch um eine Klemmfunktion ergänzt. Diese Ausgestaltung ermöglicht überraschend die Kombination dieser beiden an sich schwer in Einklang zu bringenden Anforderungen. Um nach der Zentrierung auch eine Bewegung des Werkstücks um eine vertikale Richtung des Zentrierbolzens zu verhindern, ist an dieser zusätzlich eine Verriegelungsvorrichtung vorgesehen. Diese Verriegelung ist insbesondere dann sinnvoll, wenn wie vorliegend der Bauteilträger auch so rotieren kann, dass sich das Werkstück sogar unterhalb des Bauteilträgers befindet und die Verriegelung folglich die auf das Werkstück wirkende Gewichtskraft aufnehmen können muss.

Hierauf aufbauend beschreiben die bevorzugten Ausführungsformen der Ansprüche 9 und 10 besonders geeigneten Ausgestaltungen einer solchen Klemmvorrichtung, welche sich insbesondere dieselben Strukturen der Zentrieraufnahme zunutze macht wie sie bereits für die Zentrierfunktion vorgesehen wurden.

Gemäß der Ausführungsform des Anspruchs 11 ist zusätzlich ein Einweiser vorgesehen, mit welcher eine gewisse Vorausrichtung der Zentrieraufnahme zum Zentrierbolzen erleichtert wird.

Die Ausführungsformen der Ansprüche 12 und 13 sehen vor, dass das Klemmen der Zentrieraufnahme gegen die Klemmfläche mittels einer Vorspannfeder erfolgt, welche eine Vorspannung in Klemmvorrichtung auf den Zentrierbolzen ausübt. Mittels eines Linearantrieb kann dann der Zentrierbolzen zunächst entgegen der Vorspannung der Vorspannfeder weg von der Klemmfläche bewegt und nach der Drehung zur Zentrierung wieder von der Vorspannfeder gegen die Klemmfläche gedrückt werden.

Schließlich betrifft die bevorzugte Ausführungsform des Anspruchs 14 eine Variante, bei der der Drehantrieb für die Drehung, welche die Zentrierung bewirkt, in einer radialen Richtung versetzt zu der Längsachse des Zentrierbolzens vorgesehen ist. Durch eine solche Anordnung ist eine bessere Ausnutzung des Bauraums innerhalb eines rechteckigen Rahmengehäuses des Aufspannrahmens möglich, wenn die Zentrieranordnung an einem solchen Aufspannrahmen vorgesehen ist, da regelmäßig die Zentrierbolzen senkrecht zu den Seitenrichtungen eines solchen Rahmengehäuses angeordnet sind.

In der nur Ausführungsbeispiele wiedergebenden Zeichnung zeigt
- Fig. 1: eine Schrägansicht eines Aufspannrahmens für Flugzeugstrukturbauteile mit vier vorschlagsgemäßen Zentrieranordnungen, von denen eine vergrößert dargestellt ist;
- Fig. 2a,b: eine Schrägansicht der Zentrieraufnahme und des Zentrierbolzens der vorschlagsgemäßen Zentrieranordnung aus Fig. 1;
- Fig. 3a-e: eine Schrägansicht der vorschlagsgemäßen Zentrieranordnung der Fig. 1 in den verschiedenen Stadien eines Zentriervorgangs;
- Fig. 4a-d: eine Draufsicht und einen Querschnitt der vorschlagsgemäßen Zentrieranordnung der Fig. 1 zu zwei Zeitpunkten des Zentriervorgangs aus den Fig. 3a-e;
- Fig. 5a,b: einen Querschnitt der vorschlagsgemäßen Zentrieranordnung der Fig. 1 sowie einen Querschnitt einer alternativen vorschlagsgemäßen Zentrieranordnung und
- Fig. 6a,b: jeweils eine Schrägansicht zweier Varianten von Einweisern einer vorschlagsgemäßen Zentrieranordnung.

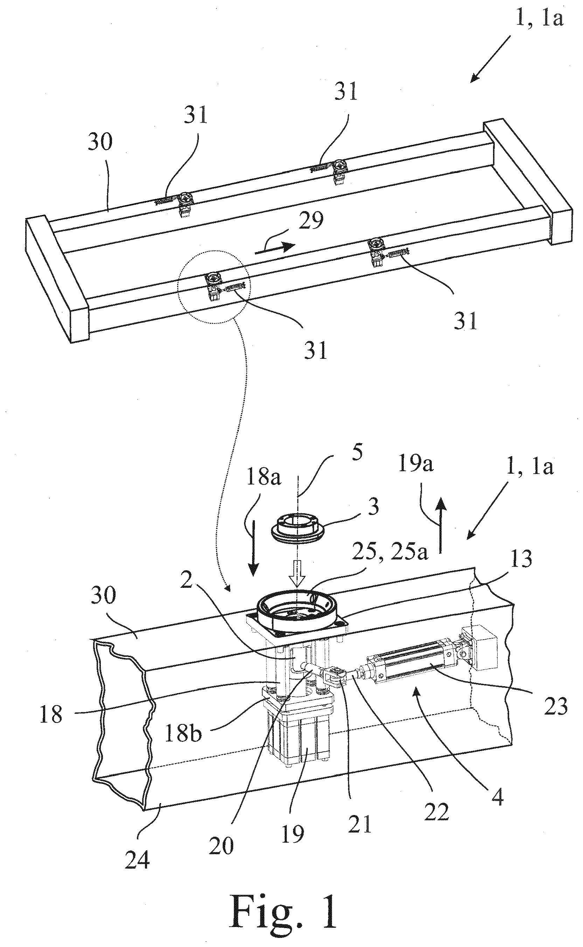

Die vorschlagsgemäße Bearbeitungsstation für Flugzeugstrukturbauteile ist hier nicht dargestellt. In der Fig. 1 ist vielmehr ein Bauteilträger 1, insbesondere ein Aufspannrahmen 1a für Flugzeugstrukturbauteile, mit vier Zentrieranordnungen einer vorschlagsgemäßen Bearbeitungsstation abgebildet. Die Fig. 1 gibt zusätzlich eine vergrößerte Schrägansicht einer dieser Zentrieranordnungen in dem Bauteilträger 1 wieder.

Der gezeigte Aufspannrahmen 1a wird in einer - hier nicht dargestellten - Bearbeitungsstation für Flugzeugstrukturbauteile eingesetzt. Zu den von diesem Aufspannrahmen 1a aufnehmbaren Flugzeugstrukturbauteilen zählen insbesondere Rumpf und Flügel eines Flugzeugs sowie deren Bestandteile.

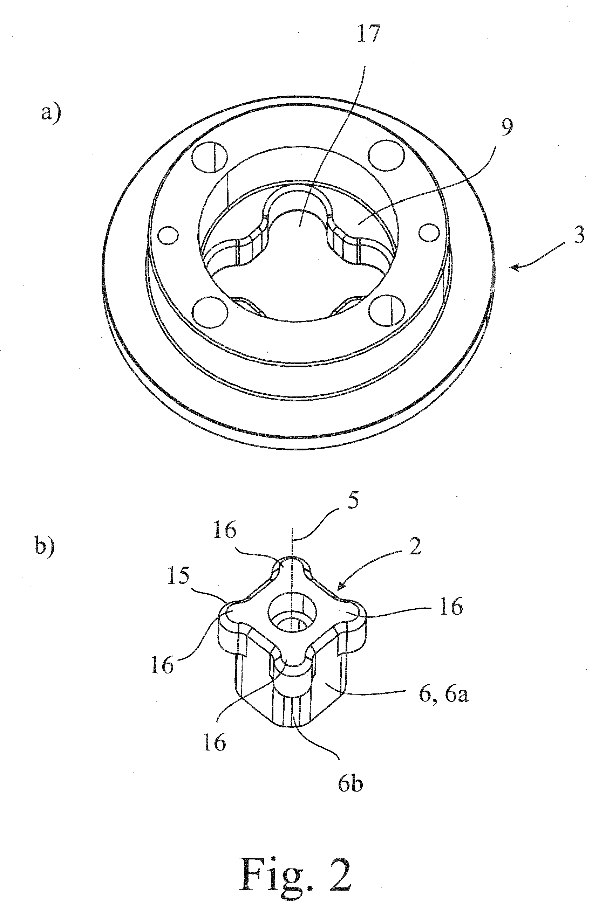

Die vorschlagsgemäße Zentrieranordnung umfasst einen Zentrierbolzen 2 und eine Zentrieraufnahme 3 für den Zentrierbolzen 2, welche jeweils in der Fig. 2b und 2a vergrößert wiedergegeben sind.

Die Zentrieraufnahme 3 ist also dazu eingerichtet, den Zentrierbolzen 2 in seiner Öffnung aufzunehmen. Die Zentrieraufnahme 3 ist hierbei werkstückseitig angeordnet und damit dem Werkstück und insbesondere dem Flugzeugstrukturbauteil zugeordnet. Es kann sich bei dieser Zentrieraufnahme 3 um eine entsprechende Aufnahme und Öffnung am Werkstück selbst handeln oder aber, wie in der Fig. 1 dargestellt, um ein separates Bauteil mit einer solchen Öffnung handeln, welches vor der Bearbeitung des Werkstücks auf eine geeignete Weise an dem Werkstück lösbar befestigt wird. Daneben kann die Zentrieraufnahme 3 auch Bestandteil eines - hier nicht gezeigten - Zwischengeschirrs mit mehreren solchen Zentrieraufnahmen 3 sein, welches Zwischengeschirr dann als Ganzes im Vorfeld auf geeignete Weise mit dem Werkstück verbunden werden kann.

Da eine solche zeitlich vorgeschaltete, mittelbare oder unmittelbare Befestigung der Zentrieraufnahme 3 am Werkstück - auf deren Einzelheiten es hier nicht ankommt - sowohl zeitlich als auch räumlich unabhängig von der Bearbeitungsstation erfolgen kann, spielt der dafür notwendige Zeitaufwand keine kritische Rolle, da die Auslastung der Bearbeitungsstation nicht dadurch beeinträchtigt wird.

Ferner umfasst die vorschlagsgemäße Zentrieranordnung einen Drehantrieb 4 zur Drehung des Zentrierbolzens 2 um eine - geometrisch zu verstehende - Längsachse 5 des Zentrierbolzens 2, so dass der Zentrierbolzen 2 durch die Drehung in einen zentrierenden Eingriff mit der Zentrieraufnahme 3 gebracht werden kann. Dabei entspricht die Längsachse 5 hier der Hauptausdehnungsrichtung des Zentrierbolzens 2, wie insbesondere aus der Fig. 1 hervorgeht.

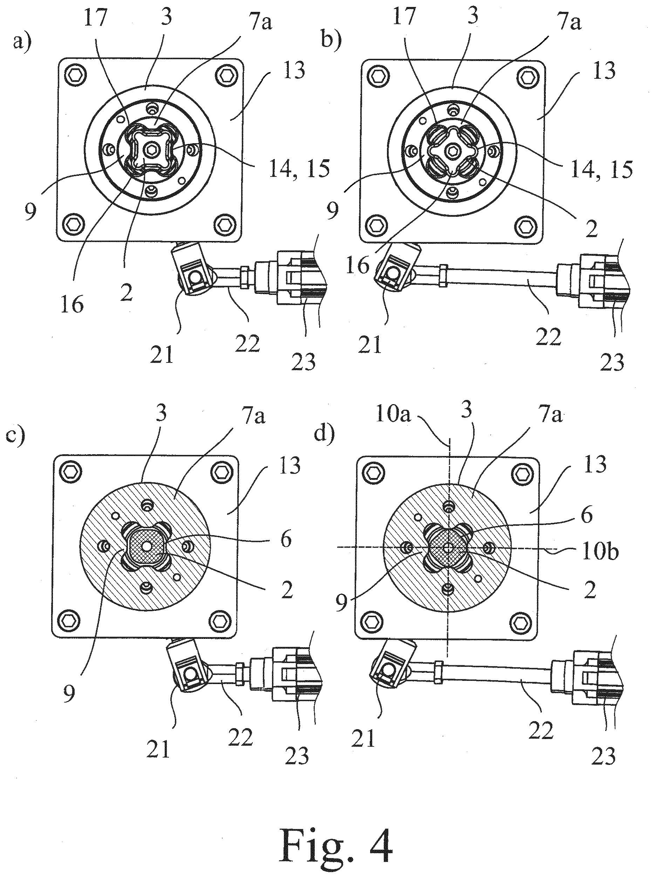

Unter dem Begriff "Eingriff" ist hier zunächst ganz allgemein ein mechanischer Kontakt zwischen dem Zentrierbolzen 2 und der Zentrieraufnahme 3 zu verstehen. Dieser Eingriff ist insofern zentrierend, als dass er zu einer mechanischen Verschiebung der Zentrieraufnahme 3, etwa durch ein Drücken, in eine vordefinierte und also zentrierte Lage in zumindest einer Dimension relativ zu dem Zentrierbolzen 2 führt, sofern die Zentrieraufnahme 3 nicht bereits in diesem Sinne zentriert ist. Vorzugweise bezieht sich diese zentrierte Lage auf die Längsachse 5 des Zentrierbolzens 2, so dass im zentrierten Zustand der Verlauf der der Längsachse 5 des Zentrierbolzens 2 entsprechenden Achse der Zentrieraufnahme 3 jedenfalls in der genannten, zumindest einen Dimension dem Verlauf der Längsachse 5 des Zentrierbolzens 2 entspricht. Bei einer Zentrierung in zwei Dimensionen, also in der Fläche, würde folglich die entsprechende Achse der Zentrieraufnahme 3 in der zentrierten Lage mit der Längsachse 5 zusammenfallen. Ein hergestellter zentrierender Eingriff in diesem Sinne ist etwa in der Fig. 4d wiedergegeben.

Der genannte zentrierende Eingriff entsteht, wenn der Zentrierbolzen 2 zuvor von der Zentrieraufnahme 3 aufgenommen wurde. Vor der genannten Drehung weist der Zentrierbolzen 2 in der Zentrieraufnahme 3 jedenfalls ausreichend Spiel auf, um die Drehung bis zur Herstellung des zentrierenden Eingriffs zu vollziehen. Im Zusammenhang mit der bereits genannten Fig. 4d zeigt die Fig. 4c den entsprechenden Zustand vor dem zentrierenden Eingriff.

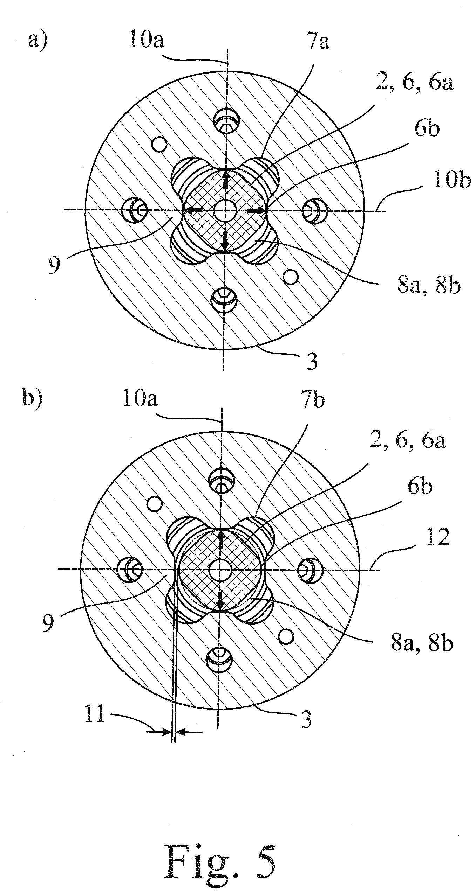

Der zentrierende Eingriff erfolgt dabei bevorzugt so, dass die Drehung des Zentrierbolzens 2 nicht durch die Zentrieraufnahme 3 blockiert wird, sondern der Zentrierbolzen 2 sich noch weiterdrehen könnte, wobei dann die Zentrierung wieder gelöst werden kann. Wie insbesondere aus der Fig. 5b hervorgeht, bewirkt die Drehung des Zentrierbolzens 2 eine Vergrößerung der wirksamen Ausdehnung des Zentrierbolzens 2 in der zu zentrierenden Richtung. Wenn die Drehung abgeschlossen ist, wie in der Fig. 5b dargestellt, hat diese Ausdehnung des Zentrierbolzens 2 in ihrem Nennmaß die Ausdehnung der entsprechenden Öffnung der Zentrieraufnahme 3 erreicht, wodurch eine Zentrierung der Zentrieraufnahme 3 erzwungen wird. Eine weitere Drehung des Zentrierbolzens 2 führt dann zu einer Verringerung dieser wirksamen Ausdehnung in Zentrierrichtung.

Es ist dementsprechend bevorzugt, dass der Zentrierbolzen 2 eine Schließkontur 6 und die Zentrieraufnahme 3 eine Gegenkontur 7a,b zur Herstellung des zentrierenden Eingriffs aufweist. Eine Schließkontur 6 und zwei alternative Gegenkonturen 7a,b sind beispielhaft in den Fig. 5a-b dargestellt.

Die Schließkontur 6 stellt hier den Querschnittsumriss des Zentrierbolzens 2 dar. Die Gegenkontur 7a,b ist dementsprechend der Querschnittsumriss der Zentrieraufnahme 3.

Diese besonders bevorzugte Ausgestaltung sieht vorzugsweise weiter vor, dass die Schließkontur 6 einen maximalen äußeren Schließradius 8a und die Gegenkontur 7 einen minimalen inneren Kontaktradius 8b um die Längsachse 5 definiert, wobei der Schließradius 8a den Kontaktradius 8b nicht übersteigt. Wie bevorzugt und ebenfalls in den Fig. 5a,b wiedergegeben, entspricht das Nennmaß des Schließradius 8a dem Nennmaß des Kontaktradius 8b, so dass Abweichungen lediglich durch Fertigungstoleranzen begründet sind und sich innerhalb dieser bewegen. Es wird darauf hingewiesen, dass für beide dargestellten Gegenkonturen 7a,b der Kontaktradius 8b identisch ist.

Der Schließradius 8a der Schließkontur 6 in diesem Sinne bezeichnet denjenigen Radius in Bezug auf die Längsachse 5, innerhalb dessen die Schließkontur 6 vollumfänglich umfasst ist. Mit anderen Worten weist die Schließkontur 6 keinen Bestandteil auf, welcher von der Längsachse 5 radial weiter als der Schließradius 8a entfernt ist. Analog bezeichnet der Kontaktradius 8b der Gegenkontur 7a,b denjenigen Radius in Bezug auf die selbe Längsachse 5, außerhalb dessen sich die Gegenkontur 7a,b vollumfänglich bildet. Anders ausgedrückt weist die Gegenkontur 7a,b keinen Bestandteil auf, welcher zu der Längsachse 5 radial näher liegt als der Kontaktradius 8b.

Dadurch, dass der Schließradius 8a den Kontaktradius 8b nicht übersteigt, ist gewährleistet, dass jedenfalls kein Formschluss zwischen der Schließkontur 6 und der Gegenkontur 7a,b der Drehung des Zentrierbolzens 2 in der Zentrieraufnahme 3 zur Herstellung des zentrierenden Eingriffs oder auch einer weiteren Drehung des Zentrierbolzens 2 entgegenstehen kann. Eine eigentliche Kollision zwischen Zentrierbolzen 2 und Zentrieraufnahme 3 bei der Drehung oder gar ein Verhaken wird dadurch ausgeschlossen. Vielmehr wird hierdurch befördert, dass mit der Drehung des Zentrierbolzens 2 die Zentrieraufnahme 3 sich relativ zu dem Zentrierbolzen 2 so bewegen kann, dass die gewünschte Zentrierung erreicht wird.

Weiter ist besonders bevorzugt, dass die Schließkontur 6 einen Mehrkant 6a und vorzugsweise einen Vierkant bildet. Ein solcher Mehrkant 6a ist dazu geeignet, durch eine Drehung um einen Rotationswinkel, welcher durch die Kantenanzahl des Mehrkants 6a definiert wird, von einer Stellung, in welcher kein zentrierender Eingriff im Sinne des Vorschlags besteht, in eine Stellung mit einem solchen zentrierenden Eingriff gebracht zu werden. Dies wird insbesondere dadurch erleichtert, dass der Mehrkant 6a, wie in den Fig. 5a,b und Fig. 2b zu erkennen ist, abgerundete Ecken 6b aufweist.

Hierauf aufbauend ist entsprechend bevorzugt, dass die Gegenkontur 7a,b nach innen vorstehende Kontaktvorsprünge 9 aufweist, wobei die Anzahl der Kanten des Mehrkants 6a mindestens, und vorzugsweise genau, der Anzahl der Kontaktvorsprünge 9 entspricht. "Nach innen vorstehend" bedeutet in diesem Zusammenhang, dass die Kontaktvorsprünge 9 radial in Richtung der Längsachse 5 weisen und dass zwischen diesen Kontaktvorsprüngen 9 bezüglich dieser radialen Richtung zurückgesetzte Abschnitte der Gegenkontur 7a,b vorhanden sind, auf welche untenstehend noch näher eingegangen wird. Es ist also bei einer solchen Ausgestaltung zweckmäßig, dass der zentrierende Eingriff zwischen dem Zentrierbolzen 2 und der Zentrieraufnahme 3 durch die - radial nach außen weisenden - Kanten des Mehrkants 6a einerseits und die nach innen vorstehenden Kontaktvorsprünge 9 der Gegenkontur 7a,b andererseits gebildet wird. Dieser Sachverhalt ist insbesondere in den Fig. 5a,b zu erkennen.

Vorzugsweise ist weiter vorgesehen, dass der zentrierende Eingriff zwischen dem Zentrierbolzen 2 und der Zentrieraufnahme 3 in einer Zentrierrichtung 10a hergestellt wird, welche radial zu der Längsachse 5 verläuft und die Längsachse 5 schneidet. Bei der Drehung des Zentrierbolzens 2 wird die Zentrieraufnahme 3 also zwangsläufig so verschoben, dass die Zentrierwirkung in dieser Zentrierrichtung 10a eintritt und nach Herstellung des zentrierenden Eingriffs eine weitere Relativbewegung - abgesehen von vernachlässigbaren Verschiebungen auf Grund der Fertigungstoleranzen - in dieser Zentrierrichtung 10a durch eben diesen zentrierenden Eingriff verhindert wird. Die Feststellung, dass die Zentrierrichtung 10a radial zu der Längsachse 5 verläuft und die Längsachse 5 schneidet, könnte auch so formuliert werden, dass die Zentrierrichtung 10a eine Radialrichtung der Längsachse 5 ist.

Eine erste Möglichkeit der bevorzugten Ausgestaltung sieht nun vor, dass beim Formschluss ein Freiabstand 11 - welcher über den fertigungstechnisch begründeten Abstand hinausgeht - zwischen dem Zentrierbolzen 2 und der Zentrieraufnahme 3 in einer Spielrichtung 12 vorhanden ist, wobei die Spielrichtung 12 radial zu der Längsachse 5 verläuft und die Längsachse 5 schneidet. Entsprechend den obenstehenden Feststellungen zur der Zentrierrichtung 10a ist dies zur Beobachtung äquivalent, dass auch die Spielrichtung 12 eine Radialrichtung der Längsachse 5 ist. Gemäß dieser ersten bevorzugten Möglichkeit wird also eine Relativbewegung zwischen dem Zentrierbolzen 2 und der Zentrieraufnahme 3 in der Zentrierrichtung 10a verhindert, in der Spielrichtung 12 aber grundsätzlich erlaubt. Dabei kann es aus verschiedenen Gründen vorteilhaft sein, pro Zentrieranordnung des Bauteilträgers 1 nur eine Zentrierrichtung 10a zu definieren.

Eine Variante gemäß dieser ersten Möglichkeit, bei welcher - wie ebenfalls bevorzugt - die Spielrichtung 12 zur Zentrierrichtung 10a rechtwinklig ist, ist in der Fig. 5b dargestellt.

Eine zweite Möglichkeit der bevorzugten Ausgestaltung wiederum, welche beispielhaft in der Fig. 5a dargestellt ist, sieht vor, dass der Formschluss zwischen dem Zentrierbolzen 2 und der Zentrieraufnahme 3 in einer weiteren Zentrierrichtung 10b hergestellt wird, welche weitere Zentrierrichtung 10b radial zur Längsachse 5 und rechtwinklig zur Zentrierrichtung 10a verläuft und die Längsachse 5 schneidet. Es handelt sich also auch bei der weiteren Zentrierrichtung 10b um eine Radialrichtung der Längsachse 5.Auch in dieser weiteren Zentrierrichtung 10b ist vorgesehen, dass wenn der zentrierende Eingriff zwischen dem Zentrierbolzen 2 und der Zentrieraufnahme 3 hergestellt ist, das Nennmaß des Zentrierbolzens 2 dem der Zentrieraufnahme 3 entspricht.

Durch einen solchen zentrierenden Eingriff zwischen dem Zentrierbolzen 2 und der Zentrieraufnahme 3 in zwei, zueinander rechtwinkligen Zentrierrichtungen 10a,b wird jedwede wesentliche translatorische Relativbewegung zwischen dem Zentrierbolzen 2 und der Zentrieraufnahme 3 in der durch die beiden Zentrierrichtungen 10a,b definierten Fläche verhindert. Diese bevorzugte Ausgestaltungsmöglichkeit bietet sich also etwa dann an, wenn durch eine einzelne vorschlagsgemäße Zentrieranordnung eine umfassende Zentrierung auf der durch den Aufspannrahmen 1a definierten Fläche gewünscht wird.

Um auch eine Relativbewegung zwischen dem Zentrierbolzen 2 und der Zentrieraufnahme 3 aus der durch die beiden Zentrierrichtungen 10a,b definierten Fläche hinaus, vor allem aber in Richtung der Längsachse 5 zu vermeiden, ist weiter bevorzugt vorgesehen, dass die Zentrieranordnung eine senkrecht zur Längsachse 5 angeordnete Klemmfläche 13 aufweist und die Zentrieranordnung eine Verriegelungsvorrichtung 14 zum Verriegeln der Zentrieraufnahme 3 bezüglich einer, vorzugsweise senkrechten, Bewegung gegenüber der Klemmfläche 13 aufweist. Diese Klemmfläche 13 ist als eine, potentiell auch nur rand- oder stegartig ausgeformte, Fläche im Sinne einer Oberfläche zu verstehen, gegen welche die Verriegelungsvorrichtung 14, beispielsweise durch einen Kraftschluss, eine Bewegung der Zentrieraufnahme 3 verhindert. Mittelbar wird damit auch eine solche Bewegung des Werkstücks verhindert. Insbesondere kann ein Verriegeln der Zentrieraufnahme 3 bezüglich einer, vorzugsweise senkrechten Bewegung gegenüber der Klemmfläche 13 in Richtung der Längsachse 5 vorgesehen sein. Auf diese Weise wird neben einer Zentrierung des Werkstücks auf dem Bauteilträger 1 auch eine Verriegelung des Werkstücks auf dem Bauteilträger 1 erreicht.

Eine entsprechende bevorzugte Weiterentwicklung zu diesem Zweck sieht vor, dass die Verriegelungsvorrichtung 14 eine Eingriffskontur 15 am Zentrierbolzen 2 zum Hintergreifen der Zentrieraufnahme 3 umfasst. Eine solche Eingriffskontur 15 ist deutlich in der Fig. 2b sowie den Fig. 4a-b erkennbar. Die Zentrieraufnahme 3 wird also nicht nur für den zentrierenden Eingriff mit der Schließkontur 6 verwendet sondern auch dazu, durch die Eingriffskontur 15 hintergriffen zu werden. Dies wiederum erlaubt es, etwa durch eine mittels der Eingriffskontur 15 auf die Zentrieraufnahme 3 ausgeübte Kraft die Zentrieraufnahme 3 gegen die Klemmfläche 13 zu drücken und damit die gewünschte Verriegelung herbeizuführen.

Weitere Vorteile ergeben sich, wenn - wie in der Fig. 2b dargestellt - eine solche Eingriffskontur 15 in Richtung der Längsachse 5 versetzt, insbesondere nur in Richtung der Längsachse 5 versetzt und damit mit Bezug auf dieselbe Längsachse 5 wie die Schließkontur 6 zentriert, zu der Schließkontur 6 angeordnet ist. Weiter insbesondere kann die Eingriffskontur 15 in Richtung der Längsachse 5 unmittelbar angrenzend an die Schließkontur 6 angeordnet sein. Damit kann durch eine Relativbewegung des Zentrierbolzens 2 zu der Zentrieraufnahme 3 sowohl die Schließkontur 6 als auch die Eingriffskontur 15 gleichzeitig in die Zentrieraufnahme 3 eingebracht werden.

Auf elegante Weise kann die bereits für den zentrierenden Eingriff vorgesehene Gegenkontur 7a,b mit ihren etwa in der Fig. 2b gezeigten Kontaktvorsprüngen 9 der Zentrieraufnahme 3 auch für die hier beschriebene Verriegelung in einer Doppelfunktion verwendet werden, wenn, wie bevorzugt, die Eingriffskontur 15 zum Hintergreifen der Gegenkontur 7a,b und dabei insbesondere zum Hintergreifen der Kontaktvorsprünge 9 eingerichtet ist. Dann sind dieselben Ausformungen der Gegenkontur 7a,b - hier also die Kontaktvorsprünge 9 - sowohl für den zentrierenden Eingriff - im Zusammenwirken mit der Schließkontur 6 - als auch für die Verriegelung - im Zusammenwirken mit der Eingriffskontur 15 - zu verwenden. Dabei kommt die Zentrierwirkung auch der Positionierung der Eingriffskontur 15 gegenüber den Kontaktvorsprüngen 9 zugute.

Die Doppelfunktion kann zusätzlich auch in der Verwendung derselben Drehbewegung für den zentrierenden Eingriff und das Hintergreifen bestehen. Dann ist vorzugsweise vorgesehen, dass die Eingriffskontur 15 dazu eingerichtet ist, die Kontaktvorsprünge 9 zu hintergreifen, wenn der Zentrierbolzen 2 durch die Drehung in den zentrierenden Eingriff mit der Zentrieraufnahme 3 gebracht ist. Die Gegenüberstellung der Fig. 4a, b einerseits und der Fig. 4c,d andererseits illustriert, wie dieselbe Drehung sowohl den zentrierenden Eingriff als auch das Hintergreifen bewirkt.

Eine bevorzugte - und ebenfalls in der Fig. 2b abgebildete - solche Eingriffskontur 15 weist Greifvorsprünge 16 auf, welche von der Längsachse 5 in radialer Richtung ausgehen und dazu eingerichtet sind, die Kontaktvorsprünge 9 zu hintergreifen wenn der Zentrierbolzen 2 durch die Drehung in den zentrierenden Eingriff mit der Zentrieraufnahme 3 gebracht ist. Diese Ausgestaltung passt gut zu einer entsprechenden, in der Fig. 2a abgebildeten und ebenfalls bevorzugten Ausgestaltung der Gegenkontur 7a,b, welche Aussparungen 17 zwischen den Kontaktvorsprüngen 9 vorsieht.

Eine besonders geeignete Abstimmung dieser Bauteile zueinander ist gegeben, wenn die Aussparungen 17 den Greifvorsprüngen 16 insoweit entsprechen, dass die Eingriffskontur 15 durch die Drehung des Zentrierbolzens 2 um die Längsachse 5 in eine Lage zu der Gegenkontur 7 gebracht werden kann, bei der die Greifvorsprünge 16 mit den Aussparungen 17 fluchten und die Eingriffskontur 15 durch die Gegenkontur 7a,b verschoben werden kann. Diese Situation ist in der Fig. 4a wiedergegeben. Mit anderen Worten kann der Zentrierbolzen 2 so gedreht werden, dass eine Bewegung des Zentrierbolzens 2 in Richtung der Längsachse 5 möglich ist, bei welcher die Eingriffskontur 15 speziell mit ihren Greifvorsprüngen 16 an der Gegenkontur 7a,b vorbei verschoben werden kann.

Nach einer solchen Bewegung bringt eine weitere Drehung - speziell die vorschlagsgemäße Drehung für den zentrierenden Eingriff - dann den Zentrierbolzen in eine Lage, bei welcher der Formschluss zwischen der Schließkontur 6 und den Kontaktvorsprüngen 9 der Gegenkontur 7a,b entsteht und die Greifvorsprünge 16 die Kontaktvorsprünge 9 hintergreifen.

Wie bereits eingangs beschrieben wurde, muss die von der Zentrieranordnung ebenfalls hergestellte Verriegelung sicherstellen, dass das von dem Bauteilträger 1 aufgenommene Werkstück, also etwa ein Flugzeugstrukturbauteil, nicht von dem Bauteilträger 1 herunterfällt. Dies sollte auch für den Fall eines unerwarteten Leistungsverlusts an der Bearbeitungsstation gelten, etwa bei einem Stromausfall oder der Betätigung eines Notaus-Schalters. Vor diesem Hintergrund ist bevorzugt vorgesehen, dass die Zentrieranordnung eine Vorspannfeder 18 aufweist, welche dazu eingerichtet ist, eine Kraft und insbesondere eine Vorspannung, auf den Zentrierbolzen 2 in einer zu der Klemmfläche 13 hinweisende Richtung 18a, welche in der Fig. 1 ausgezeichnet ist, auszuüben.

In den hier gezeigten Ausführungsbeispielen ist die Vorspannfeder 18 so angeordnet, dass sie einen mit dem Zentrierbolzen 2 verbundenen Zwischenträger 18b von einer Rückseite der Klemmfläche 13 wegdrückt, womit im Ergebnis der Zentrierbolzen 2 in die besagte Richtung 18a vorgespannt wird. Damit muss eine Kraft aufgewandt werden, um den Zentrierbolzen 2 aus der Verriegelungssituation zu bewegen, so dass im Falle eines Ausfalls aller Motoren allein durch die Vorspannfeder 18 eine Verriegelung gewährleistet ist, falls der Zentrierbolzen 2 in einem entsprechenden Eingriff zu der Zentrieraufnahme 3 steht.

Vor diesem Hintergrund ist bevorzugt für die oben bereits beschriebene Verschiebung des Zentrierbolzens 2 vorgesehen, dass die Zentrieranordnung einen Linearantrieb 19 zur Bewegung des Zentrierbolzens 2 entlang der Längsachse 5 aufweist. Insbesondere kann dabei der Linearantrieb 19 an einem zur Eingriffskontur 15 - und damit bevorzugt auch zur Schließkontur 6 - gegenüber liegenden Ende des Zentrierbolzens 2 angeordnet sein. Im Zusammenhang mit der Tätigkeit der Vorspannfeder 18 ist es bevorzugt, dass der Linearantrieb 19 dazu eingerichtet ist, den Zentrierbolzen 2 in eine von der Klemmfläche 13 hinwegweisende Richtung 19b zu bewegen. Dabei ist es besonders sinnvoll, dass der Linearantrieb 19 an demselben Zwischenträger 18b ansetzt wie auch die besagte Vorspannfeder 18.

Ferner ergibt sich die Möglichkeit einer besonders ökonomisch den Raum eines Aufspannrahmens 1a ausnutzenden Weiterbildung, wenn der Drehantrieb 4 einen radial zur Längsachse 5 angeordneten Umlenkarm 20 am Zentrierbolzen 2 aufweist. Auf diese Weise kann ein Motor zum Bewirken der Drehung in radialer Richtung beabstandet von dem Zentrierbolzen 2 angeordnet werden. Dies ist dann sinnvoll, wenn in Richtung der Längsachse 5 des Zentrierbolzens 2 der Bauraum knapp ist. Bei dieser Weiterbildung kann auch vorgesehen sein, dass der Umlenkarm 20 an einem radial äußeren Ende über ein Drehgelenk 21 mit einer Hubstange 22 verbunden sein. Das ist insbesondere in der Fig. 1 zu erkennen. Die Hubstange 22 wiederum kann - wie dargestellt - mit einem entsprechenden Linearmotor 23 verbunden sein.

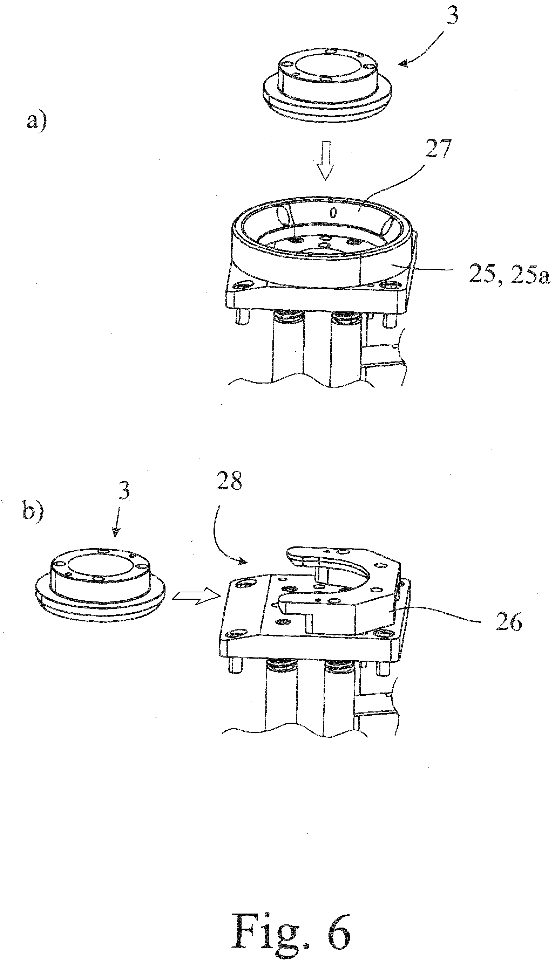

Eine weitere bevorzugte Ausgestaltung der vorschlagsgemäßen Zentrieranordnung, wiedergegeben in den Fig. 6a,b, umfasst einen Einweiser 25, 26, welcher dazu eingerichtet ist, die Zentrieraufnahme 3 auf die Längsachse 5 des Zentrierbolzens 2 auszurichten. Dabei kann die Form des Einweisers 25, 26 von der Lage der Zentrieranordnung an dem Aufspannrahmen 1a abhängig sein.

Wenn, wie in der Fig. 1 dargestellt, die vorschlagsgemäße Zentrieranordnung an dem Aufspannrahmen 1a eine vertikale, nach oben gerichtete Ausrichtung aufweist, bestimmt anhand der Längsachse 5 des Zentrierbolzens 2, dann kann der Einweiser 25 gemäß der Darstellung der Fig. 6a in Form eines Ringes 25a ausgestaltet sein, welcher eine sich verjüngende Innenfläche 27 aufweist. Eine sich von oben nähernde Zentrieraufnahme 3 gleitet dann an dieser sich verjüngenden Innenfläche in Richtung der Mitte des Einweisers 25, wodurch eine dahingehende Vorausrichtung der Zentrieraufnahme 3 bewirkt wird, nach welcher der Zentrierbolzen 2 mit der Öffnung der Zentrieraufnahme 3 fluchtet.

Alternativ kann die vorschlagsgemäße Zentrieranordnung auch eine horizontale Ausrichtung an dem Aufspannrahmen 1a aufweisen, wiederum bestimmt anhand der Längsachse 5 des Zentrierbolzens 2. Dann kann der Einweiser 26 gemäß der Darstellung der Fig. 6b in Form einer U-förmigen Falz ausgestaltet sein. Die offene Seite 28 der U-förmigen Falz weist dann ebenfalls in vertikaler Richtung nach oben, aus welcher Richtung regelmäßig die Zentrieraufnahme 3 in den Einweiser 26 geführt wird. Weitere Ausgestaltungen von solchen Einweisern sind ebenso denkbar.

Als weitere bevorzugte Ausführungsform ist ein Aufspannrahmen 1a für Flugzeugstrukturbauteile, wie etwa in der Fig. 1 dargestellt, zu nennen mit einem Rahmengehäuse 24 in Rechteckform und einer Mehrzahl von vorschlagsgemäßen Zentrieranordnungen.

Hier sieht eine bevorzugte Weiterentwicklung eines solchen Aufspannrahmens 1a vor, dass die jeweilige Klemmfläche 13 der Zentrieranordnungen einen Teil einer Außenfläche 30 des Rahmengehäuses 24 bildet. Wenn dann, wie bevorzugt und in der Fig. 1 dargestellt, die jeweiligen Klemmflächen 13 der Zentrieranordnungen in dieselbe Richtung weisen, können die Zentrieranordnungen zur Zentrierung eines aus dieser Richtung auf den Aufspannrahmen 1a gebrachten Flugzeugstrukturbauteils verwendet werden.

Eine weitere bevorzugte Weiterbildung des Aufspannrahmens 1a sieht ferner vor, dass der Aufspannrahmen 1a einen Linearmotor 23 für die Betätigung eines Umlenkarms 20 aufweist, wobei der Linearmotor 23 innerhalb des Rahmengehäuses 24 in einer Seitenrichtung 29 der Rechteckform angeordnet ist. Bei einem solchen Aufspannrahmen 1a kann dann die Zentrierung und die Verriegelung vollautomatisch erfolgen. Unter einer Seitenrichtung 29 der Rechteckform ist eine beliebige Richtung zu verstehen, welche der Ausdehnung einer der vier Rechteckseiten der Rechteckform des Aufspannrahmens 1a entspricht.

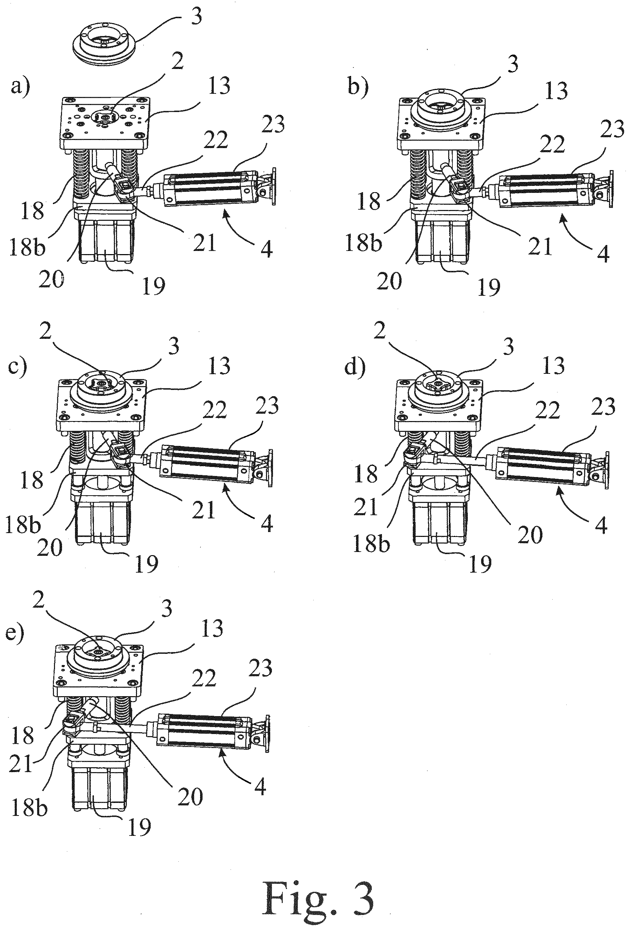

Nachdem nun die Bestandteile der vorschlagsgemäßen Zentrieranordnung und ihrer bevorzugten Ausgestaltungen beschrieben wurden, wird anhand der Fig. 3a-e sowie Fig. 4a-d ein entsprechendes vorschlagsgemäßes Verfahren zur Zentrierung und Verriegelung einer Zentrieraufnahme 2 durch einen Zentrierbolzen 2 auf einer Klemmfläche 13, insbesondere auf der Klemmfläche 13 eines Bauteilträgers 1, erläutert.

In der Fig. 4a wird die Zentrieranordnung im Ruhezustand vor Ausführung des vorschlagsgemäßen Verfahrens und noch vor Annäherung der Zentrieraufnahme 3 auf die Klemmfläche 13 dargestellt.

Das genannte vorschlagsgemäße Verfahren umfasst nun das Bewegen des Zentrierbolzens 2 durch die Zentrieraufnahme 3, so dass Greifvorsprünge 16 einer Eingriffskontur 15 des Zentrierbolzens 2 durch Aussparungen 17 einer Gegenkontur 7a,b der Zentrieraufnahme 3 geführt werden. Dieser Verfahrensschritt erfolgt als Übergang zwischen dem Zustand in der Fig. 3b und dem Zustand in der Fig. 3c. Insbesondere kann dieses Bewegen gegen eine - bereits oben beschriebene - Vorspannung einer Vorspannfeder 18 erfolgen, gemäß dem Ausführungsbeispiel der Fig. 3 bewirkt durch den Linearantrieb 19.

Weiter umfasst das vorschlagsgemäße Verfahren das Drehen des Zentrierbolzens 2 um eine Längsachse 5 des Zentrierbolzens 2, wodurch eine Schließkontur 6 des Zentrierbolzens 2 mit der Gegenkontur 7a,b der Zentrieraufnahme 3 in einen zentrierenden Eingriff gebracht wird und gleichzeitig die Greifvorsprünge 16 die Gegenkontur 7a,b hintergreifen. Dieser Verfahrensschritt findet zwischen der Darstellung der Fig. 3c und derjenigen der Fig. 3d statt. Ebenso ist der entsprechende Übergang - bezogen aus das Hintergreifen der Gegenkontur 7a,b - aus einem Vergleich der Fig. 4a mit der Fig. 4b und - bezogen auf den zentrierenden Eingriff - aus einem Vergleich der Fig. 4c mit der Fig. 4d zu erkennen.

Schließlich umfasst das vorschlagsgemäße Verfahren das Drücken der Zentrieraufnahme 3 gegen die Klemmfläche 13 durch eine Bewegung des Zentrierbolzens 2. Dieser Verfahrensschritt entspricht dem Übergang von der Situation der Fig. 3d zu derjenigen der Fig. 3e. Diese Bewegung kann insbesondere und wie bereits beschrieben durch die Vorspannung der Vorspannfeder 18 bewirkt werden. Der Linearantrieb 19 muss also nicht in diese Richtung wirken, sondern lediglich die vorher gegen die Vorspannfeder 18 gerichtete Kraft wieder abstellen.

Weitere bevorzugte Ausführungsformen des vorschlagsgemäßen Verfahrens ergeben sich aus den bereits beschriebenen, bevorzugten Ausführungsformen der vorschlagsgemäßen Zentrieranordnung.

## Patentansprüche

1. Bearbeitungsstation für Flugzeugstrukturbauteile mit einer Zentrieranordnung für einen Bauteilträger (1), insbesondere für einen Aufspannrahmen (1a) für Flugzeugstrukturbauteile, mit einem Zentrierbolzen (2), einer Zentrieraufnahme (3) für den Zentrierbolzen (2) und einem Drehantrieb (4) zur Drehung des Zentrierbolzens (2) um eine Längsachse (5) des Zentrierbolzens (2), so dass der Zentrierbolzen (2) durch die Drehung in einen zentrierenden Eingriff mit der Zentrieraufnahme (3) gebracht werden kann, wobei der Zentrierbolzen (2) eine Schließkontur (6) und die Zentrieraufnahme (3) eine Gegenkontur (7a,b) zur Herstellung des zentrierenden Eingriffs aufweist.

2. Bearbeitungsstation nach Anspruch 1, **dadurch gekennzeichnet, dass**, die Schließkontur (6) einen maximalen äußeren Schließradius (8a) und die Gegenkontur (7a,b) einen minimalen inneren Kontaktradius (8b) um die Längsachse (5) definiert, wobei der Schließradius (8a) den Kontaktradius (8b) nicht übersteigt.

3. Bearbeitungsstation nach Anspruch 2, **dadurch gekennzeichnet, dass** die Schließkontur (6) einen Mehrkant (6a), vorzugsweise einen Vierkant, bildet, insbesondere, wobei der Mehrkant (6a) abgerundete Ecken (6b) aufweist.

4. Bearbeitungsstation nach Anspruch 3, **dadurch gekennzeichnet, dass** die Gegenkontur (7a,b) nach innen vorstehende Kontaktvorsprünge (9) aufweist, wobei die Anzahl der Kanten des Mehrkants (6a) mindestens, vorzugsweise genau, der Anzahl der Kontaktvorsprünge (9) entspricht.

5. Bearbeitungsstation nach einem der Ansprüche 1 bis 4, **dadurch gekennzeichnet, dass** der zentrierende Eingriff zwischen dem Zentrierbolzen (2) und der Zentrieraufnahme (3) in einer Zentrierrichtung (10a) hergestellt wird, welche Zentrierrichtung (10a) radial zu der Längsachse (5) verläuft und die Längsachse (5) schneidet.

6. Bearbeitungsstation nach Anspruch 5, **dadurch gekennzeichnet, dass** beim zentrierenden Eingriff ein Freiabstand (11) zwischen dem Zentrierbolzen (2) und der Zentrieraufnahme (3) in einer, vorzugsweise zur Zentrierrichtung (10a) rechtwinkligen, Spielrichtung (12) vorhanden ist, wobei die Spielrichtung (12) radial zu der Längsachse (5) verläuft und die Längsachse (5) schneidet.

7. Bearbeitungsstation nach einem der Anspruch 5, **dadurch gekennzeichnet, dass** der zentrierende Eingriff zwischen dem Zentrierbolzen (2) und der Zentrieraufnahme (3) in einer weiteren Zentrierrichtung (10b) hergestellt wird, welche weitere Zentrierrichtung (10b) radial zur Längsachse (5) und rechtwinklig zur Zentrierrichtung (10a) verläuft und die Längsachse (5) schneidet.

8. Bearbeitungsstation nach einem der Ansprüche 1 bis 7, **dadurch gekennzeichnet, dass** die Zentrieranordnung eine senkrecht zur Längsachse (5) angeordnete Klemmfläche (13) aufweist und die Zentrieranordnung eine Verriegelungsvorrichtung (14) zum Verriegeln der Zentrieraufnahme (3) bezüglich einer, vorzugsweise senkrechten, Bewegung gegenüber der Klemmfläche (13), aufweist.

9. Bearbeitungsstation nach Anspruch 8, **dadurch gekennzeichnet, dass** die Verriegelungsvorrichtung (14) eine Eingriffskontur (15) am Zentrierbolzen (2) zum Hintergreifen der Zentrieraufnahme (3) umfasst, vorzugsweise, wobei die Eingriffskontur (15) in Richtung der Längsachse (5) versetzt zu der Schließkontur (6) angeordnet ist, insbesondere, wobei die Eingriffskontur (15) zum Hintergreifen der Gegenkontur (7a,b), insbesondere der Kontaktvorsprünge (9), eingerichtet ist, weiter insbesondere, wobei die Eingriffskontur (15) dazu eingerichtet ist, die Kontaktvorsprünge (9) zu hintergreifen, wenn der Zentrierbolzen (2) durch die Drehung in den zentrierenden Eingriff mit der Zentrieraufnahme (3) gebracht ist.

10. Bearbeitungsstation nach Anspruch 9, **dadurch gekennzeichnet, dass** die Eingriffskontur (15) Greifvorsprünge (16) aufweist, welche von der Längsachse (5) in radialer Richtung ausgehen und dazu eingerichtet sind, die Kontaktvorsprünge (9) zu hintergreifen wenn der Zentrierbolzen (2) durch die Drehung in den zentrierenden Eingriff mit der Zentrieraufnahme (3) gebracht ist, vorzugsweise, wobei die Gegenkontur (7a,b) eine Aussparungen (17) zwischen den Kontaktvorsprüngen (9) aufweist, insbesondere, wobei die Aussparungen (17) den Greifvorsprüngen (16) insoweit entsprechen, dass die Eingriffskontur (15) durch die Drehung des Zentrierbolzens (2) um die Längsachse (5) in eine Lage zu der Gegenkontur (7a,b) gebracht werden kann, bei der die Greifvorsprünge (16) mit den Aussparungen (17) fluchten und die Eingriffskontur (15) durch die Gegenkontur (7a,b) verschoben werden kann.

11. Bearbeitungsstation nach einem der Ansprüche 8 bis 10, **dadurch gekennzeichnet, dass** die Zentrieranordnung eine Vorspannfeder (18) aufweist, welche dazu eingerichtet ist, eine Kraft, insbesondere eine Vorspannung, auf den Zentrierbolzen (2) in eine zu der Klemmfläche (13) hinweisende Richtung (18b) auszuüben.

12. Bearbeitungsstation nach einem der Ansprüche 8 bis 11, **dadurch gekennzeichnet, dass** die Zentrieranordnung einen Linearantrieb (19) zur Bewegung des Zentrierbolzens (2) entlang der Längsachse (5) aufweist, vorzugsweise, wobei der Linearantrieb (19) an einem zur Eingriffskontur (15) gegenüber liegendem Ende des Zentrierbolzens (2) angeordnet ist, insbesondere, wobei der Linearantrieb (19) dazu eingerichtet ist, den Zentrierbolzen (2) in eine von der Klemmfläche (13) hinwegweisende Richtung (19a) zu bewegen.

13. Bearbeitungsstation nach einem der Ansprüche 1 bis 12, **dadurch gekennzeichnet, dass** der Drehantrieb (4) einen radial zur Längsachse (5) angeordneten Umlenkarm (20) am Zentrierbolzen (2) aufweist, vorzugsweise, wobei der Umlenkarm (20) an einem radial äußeren Ende über ein Drehgelenk (21) mit einer Hubstange (22) verbunden ist.

14. Bearbeitungsstation nach einem der Ansprüche 1 bis 10, **dadurch gekennzeichnet, dass** die Zentrieranordnung einen Einweiser (25, 26) umfasst, welcher dazu eingerichtet ist, die Zentrieraufnahme (3) auf die Längsachse (5) des Zentrierbolzens (2) auszurichten.

15. Verfahren zur Zentrierung und Verriegelung mittels einer Zentrieranordnung einer Bearbeitungsstation für Flugzeugstrukturbauteile, welche einen Zentrierbolzen (2) und eine Zentrieraufnahme (3) aufweist, wobei zur Zentrierung und Verriegelung der Zentrieraufnahme (3) durch den Zentrierbolzen (2) auf einer Klemmfläche (13), insbesondere auf der Klemmfläche (13) eines Bauteilträgers (1), das Verfahren die Schritte umfasst:
- Bewegen, insbesondere gegen eine Vorspannung einer Vorspannfeder (18), des Zentrierbolzens (2) durch die Zentrieraufnahme (3), so dass Greifvorsprünge (16) einer Eingriffskontur (15) des Zentrierbolzens (2) durch Aussparungen (17) einer Gegenkontur (7a,b) der Zentrieraufnahme (3) geführt werden,
- Drehen des Zentrierbolzens (2) um eine Längsachse (5) des Zentrierbolzens (2), wodurch eine Schließkontur (6) des Zentrierbolzens (2) mit der Gegenkontur (7a,b) der Zentrieraufnahme (3) in einen zentrierenden Eingriff gebracht wird und gleichzeitig die Greifvorsprünge (16) die Gegenkontur (7a,b) hintergreifen, und
- Drücken der Zentrieraufnahme (3) gegen die Klemmfläche (13) durch eine Bewegung des Zentrierbolzens (2), insbesondere auch bewirkt durch die Vorspannung der Vorspannfeder (18).

## Claims

1. Processing station for structural aircraft components having a centring arrangement for a component carrier (1), in particular for a mounting frame (1a) for structural aircraft components, having a centring pin (2), a centring receptacle (3) for the centring pin (2), and a rotary drive (4) for rotating the centring pin (2) about a longitudinal axis (5) of the centring pin (2), so that the centring pin (2) can be brought into centring engagement with the centring receptacle (3) as a result of the rotation, wherein the centring pin (2) has a closing contour (6) and the centring receptacle (3) has a mating contour (7a, b) for establishing the centring engagement.

2. Processing station according to Claim 1, **characterized in that** the closing contour (6) defines a maximum outer closing radius (8a) and the mating contour (7a, b) defines a minimum inner contact radius (8b) about the longitudinal axis (5), wherein the closing radius (8a) does not exceed the contact radius (8b).

3. Processing station according to Claim 2, **characterized in that** the closing contour (6) forms a polygon (6a), preferably a square, in particular wherein the polygon (6a) has rounded corners (6b).

4. Processing station according to Claim 3, **characterized in that** the mating contour (7a, b) has inwardly projecting contact projections (9), wherein the number of edges of the polygon (6a) corresponds to at least, preferably precisely, the number of contact projections (9).

5. Processing station according to one of Claims 1 to 4, **characterized in that** the centring engagement between the centring pin (2) and the centring receptacle (3) is established in a centring direction (10a), which centring direction (10a) runs radially in relation to the longitudinal axis (5) and intersects the longitudinal axis (5).

6. Processing station according to Claim 5, **characterized in that**, in the event of centring engagement, there is a free space (11) between the centring pin (2) and the centring receptacle (3) in a direction (12) of play, which is preferably perpendicular to the centring direction (10a), wherein the direction (12) of play runs radially in relation to the longitudinal axis (5) and intersects the longitudinal axis (5).

7. Processing station according to Claim 5, **characterized in that** the centring engagement between the centring pin (2) and the centring receptacle (3) is established in a further centring direction (10b), which further centring direction (10b) runs radially in relation to the longitudinal axis (5) and perpendicularly in relation to the centring direction (10a) and intersects the longitudinal axis (5).

8. Processing station according to one of Claims 1 to 7, **characterized in that** the centring arrangement has a clamping area (13) which is arranged perpendicular to the longitudinal axis (5), and the centring arrangement has a locking apparatus (14) for locking the centring receptacle (3) with respect to a, preferably perpendicular, movement relative to the clamping area (13).

9. Processing station according to Claim 8, **characterized in that** the locking apparatus (14) comprises an engagement contour (15) on the centring pin (2) for engaging behind the centring receptacle (3), preferably wherein the engagement contour (15) is arranged offset in relation to the closing contour (6) in the direction of the longitudinal axis (5), in particular wherein the engagement contour (15) is designed to engage behind the mating contour (7a, b), in particular the contact projections (9), further particularly wherein the engagement contour (15) is designed to engage behind the contact projections (9) when the centring pin (2) is brought into centring engagement with the centring receptacle (3) as a result of the rotation.

10. Processing station according to Claim 9, **characterized in that** the engagement contour (15) has gripping projections (16) which extend from the longitudinal axis (5) in the radial direction and are designed to engage behind the contact projections (9) when the centring pin (2) is brought into centring engagement with the centring receptacle (3) as a result of the rotation, preferably wherein the mating contour (7a, b) has a cutout (17) between the contact projections (9), in particular wherein the cutouts (17) correspond to the gripping projections (16) to such an extent that the engagement contour (15) can be moved, as a result of the rotation of the centring pin (2) about the longitudinal axis (5), to a position in relation to the mating contour (7a, b) in which the gripping projections (16) can be aligned with the cutouts (17) and the engagement contour (15) can be shifted by the mating contour (7a, b).

11. Processing station according to one of Claims 8 to 10, **characterized in that** the centring arrangement has a pretensioning spring (18) which is designed to exert a force, in particular a pretension, onto the centring pin (2) in a direction (18b) which points towards the clamping area (13).

12. Processing station according to one of Claims 8 to 11, **characterized in that** the centring arrangement has a linear drive (19) for moving the centring pin (2) along the longitudinal axis (5), preferably wherein the linear drive (19) is arranged at an end of the centring pin (2) which is situated opposite the engagement contour (15), in particular wherein the linear drive (19) is designed to move the centring pin (2) in a direction (19a) which points away from the clamping area (13).

13. Processing station according to one of Claims 1 to 12, **characterized in that** the rotary drive (4) has a deflection arm (20) on the centring pin (2), which deflection arm is arranged radially in relation to the longitudinal axis (5), preferably wherein the deflection arm (20) is connected to a lifting rod (22) by means of a rotary joint (21) at a radially outer end.

14. Processing station according to one of Claims 1 to 10, **characterized in that** the centring arrangement comprises a guide (25, 26) which is designed to orient the centring receptacle (3) to the longitudinal axis (5) of the centring pin (2).

15. Method for centring and locking by means of a centring arrangement of a processing station for structural aircraft components, which centring arrangement has a centring pin (2) and a centring receptacle (3), wherein for centring and locking the centring receptacle (3) on a clamping area (13), in particular on the clamping area (13) of a component carrier (1), using the centring pin (2), the method comprises the steps of:
- moving the centring pin (2) through the centring receptacle (3), in particular against a pretension of a pretensioning spring (18), so that gripping projections (16) of an engagement contour (15) of the centring pin (2) are guided through cutouts (17) in a mating contour (7a, b) of the centring receptacle (3),
- rotating the centring pin (2) about a longitudinal axis (5) of the centring pin (2), as a result of which a closing contour (6) of the centring pin (2) is brought into centring engagement with the mating contour (7a, b) of the centring receptacle (3), and at the same time the gripping projections (16) engage behind the mating contour (7a, b), and
- pushing the centring receptacle (3) against the clamping area (13) as a result of a movement of the centring pin (2), in particular also effected by the pretension of the pretensioning spring (18).

## Revendications

1. Poste de traitement pour composant structurel d'avion, présentant un ensemble de centrage de porte-composant (1), en particulier pour un cadre de serrage (1a) de composant structurel d'avion, un goujon de centrage (2), un logement de centrage (3) pour le goujon de centrage (2) et un entraînement en rotation (4) qui fait tourner le goujon de centrage (2) autour d'un axe longitudinal (5) du goujon de centrage (2) de telle sorte que le goujon de centrage (2) puisse être amené par sa rotation à engager le logement de centrage (3) et s'y centrer, le goujon de centrage (2) présentant un contour de fermeture (6) et le logement de centrage (3) un contour complémentaire (7a, b) qui permet d'établir l'engagement de centrage.

2. Poste de traitement selon la revendication 1, **caractérisé en ce que** le contour de fermeture (6) définit un rayon maximal extérieur de fermeture (8a) et le contour complémentaire (7a, b) un rayon minimum intérieur de contact (8b) autour de l'axe longitudinal (5), le rayon de fermeture (8a) ne dépassant pas le rayon de contact (8b).

3. Poste de traitement selon la revendication 2, **caractérisé en ce que** le contour de fermeture (6) forme une section transversale polygonale (6a), de préférence une section transversale carrée, la section transversale polygonale (6a) présentant des sommets (6b) arrondis.

4. Poste de traitement selon la revendication 3, **caractérisé en ce que** le contour complémentaire (7a, b) présente des saillies de contact (9) débordant vers l'intérieur, le nombre des côtés de la section transversale polygonale (6a) correspondant au moins et de préférence exactement au nombre des saillies de contact (9).

5. Poste de traitement selon l'une des revendications 1 à 4, **caractérisé en ce que** l'engagement de centrage entre le goujon de centrage (2) et le logement de centrage (3) s'établit dans une direction de centrage (10a), la direction de centrage (10a) s'étendant radialement par rapport à l'axe longitudinal (5) et intersectant l'axe longitudinal (5).

6. Poste de traitement selon la revendication 5, **caractérisé en ce que** lors de l'engagement de centrage, une distance libre (11) est prévue entre le goujon de centrage (2) et le logement de centrage (3) dans une direction de jeu (12) de préférence orthogonale à la direction de centrage (10a), la direction de jeu (12) s'étendant radialement par rapport à l'axe longitudinal (5) et intersectant l'axe longitudinal (5).

7. Poste de traitement selon la revendication 5, **caractérisé en ce que** l'engagement de centrage entre le goujon de centrage (2) et le logement de centrage (3) s'établit dans une autre direction de centrage (10b), cette autre direction de centrage (10b) s'étendant radialement par rapport à l'axe longitudinal (5) et orthogonalement par rapport à la direction de centrage (10a) et intersectant l'axe longitudinal (5).

8. Poste de traitement selon l'une des revendications 1 à 7, **caractérisé en ce que** l'ensemble de centrage présente une surface de serrage (13) disposée perpendiculairement à l'axe longitudinal (5) et **en ce que** l'agencement de centrage présente un ensemble de verrouillage (14) qui verrouille le logement de centrage (3) pour un déplacement par rapport à la surface de serrage (13), de préférence perpendiculaire à cette dernière.

9. Poste de traitement selon la revendication 8, **caractérisé en ce que** l'ensemble de verrouillage (14) comporte un contour d'engagement (15) sur le goujon de centrage (2) en vue d'accrocher le logement de centrage (3) par l'arrière, le contour d'engagement (15) étant disposé dans la direction de l'axe longitudinal (5) en décalage par rapport au contour de fermeture (6), le contour d'engagement (15) étant destiné à accrocher par l'arrière le contour complémentaire (7a, b), en particulier les saillies de contact (9), et en outre, le contour d'engagement (15) est conçu pour accrocher par l'arrière les saillies de contact (9) lorsque le goujon de centrage (2) est amené par la rotation à engager le logement de centrage (3) et à s'y centrer.

10. Poste de traitement selon la revendication 9, **caractérisé en ce que** le contour d'engagement (15) présente des saillies d'engagement (16) qui débordent de l'axe longitudinal (5) dans la direction radiale et qui sont destinés à accrocher par l'arrière les saillies de contact (9) lorsque le goujon de centrage (2) est amené par sa rotation à engager le logement de centrage (3) et à s'y centrer, et **en ce que** de préférence, le contour complémentaire (7a, b) présente des découpes (17) entre les saillies de contact (9), les découpes (17) correspondant en particulier aux saillies d'engagement (16) de telle sorte que le contour d'engagement (15) puisse être amené du fait de la rotation du goujon de centrage (2) autour de l'axe longitudinal (5) dans une position par rapport au contour complémentaire (7a, b) dans laquelle les saillies d'engagement (16) sont alignées sur les découpes (17) et le contour d'engagement (15) peut être déplacé par le contour complémentaire (7a, b).

11. Poste de traitement selon l'une des revendications 8 à 10, **caractérisé en ce que** l'ensemble de centrage présente un ressort de précontrainte (18) destiné à exercer une force et en particulier une précontrainte sur le goujon de centrage (2), dans une direction (18b) orientée vers la surface de serrage (13).

12. Poste de traitement selon l'une des revendications 8 à 11, **caractérisé en ce que** l'ensemble de centrage présente un entraînement linéaire (19) qui déplace le goujon de centrage (2) le long de l'axe longitudinal (5), l'entraînement linéaire (19) étant de préférence disposé à une extrémité du goujon de centrage (2) située face au contour d'engagement (15), et en particulier **en ce que** l'entraînement linéaire (19) est destiné à déplacer le goujon de centrage (2) dans une direction (19a) s'éloignant de la surface de serrage (13).

13. Poste de traitement selon l'une des revendications 1 à 12, **caractérisé en ce que** l'entraînement en rotation (4) présente sur le goujon de centrage (2) un bras de renvoi (20) disposé radialement par rapport à l'axe longitudinal (5) et de préférence **en ce que** le bras de renvoi (20) est relié à une extrémité radialement extérieure par une articulation en rotation (21) dotée d'une tige de déplacement (22).

14. Poste de traitement selon l'une des revendications 1 à 10, **caractérisé en ce que** l'ensemble de centrage comporte un indicateur (25, 26) conçu pour aligner le logement de centrage (3) sur l'axe longitudinal (5) du goujon de centrage (2).

15. Procédé de centrage et de verrouillage au moyen d'un ensemble de centrage d'un poste de traitement de composant structurel d'avion, l'ensemble présentant un goujon de centrage (2) et un logement de centrage (3), le procédé comportant pour centrer et verrouiller le logement de centrage (3) par le goujon de centrage (2) sur une surface de serrage (13) et en particulier sur la surface de serrage (13) d'un porte-composant (1) les étapes suivantes :
déplacement, en particulier en opposition à une précontrainte d'un ressort de précontrainte (18), du goujon de centrage (2) à travers le logement de centrage (3) de telle sorte que des saillies d'engagement (16) d'un contour d'engagement (15) du goujon de centrage (2) soient guidées par des découpes (17) d'un contour complémentaire (7a, b) du logement de centrage (3),
rotation du goujon de centrage (2) autour d'un axe longitudinal (5) du goujon de centrage (2) ce qui amène un contour de fermeture (6) du goujon de centrage (2) à engager le contour complémentaire (7a, b) du logement de centrage (3) et à s'y centrer, en même temps que les saillies d'engagement (16) accrochent par l'arrière le contour complémentaire (7a, b) et
poussée du logement de centrage (3) contre la surface de serrage (13) par un déplacement du goujon de centrage (2) réalisé en particulier par la précontrainte du ressort de précontrainte (18).
